# EUROPÄISCHE PATENTANMELDUNG

(11) **EP 1 078 943 A2**
(43) Veröffentlichungstag der Anmeldung: **28.02.2001**
(21) Anmeldenummer: 00116282.5
(22) Anmeldetag: 10.08.2000
(51) Int. Cl.: C08G 18/67, C09D 175/16

(54) **Neue Bindemittel für Pulverlacke enthaltend (Meth)Acryloxylgruppen aufweisende Oligo- und Polyurethane**

(30) Priorität: 23.08.1999 DE 19939843
(71) Anmelder: BAYER AG, 51368 Leverkusen (DE)
(72) Erfinder: Weikard, Jan, Dr., 50670 Köln (DE); Zwiener, Christian, Dr., 50672 Köln (DE); Fischer, Wolfgang, Dr., 40668 Meerbusch (DE); Thometzek, Peter, Dr., 51469 Bergisch Gladbach (DE)

(57) **Zusammenfassung**

Die Erfindung betrifft neue pulverförmige Bindemittel aus bestimmten (Meth)Acryloylgruppen aufweisenden Oligo- und Polyurethanen, die nach Applikation auf ein Substrat und Aufschmelzen durch Wärme mittels energiereicher Strahlung insbesondere UV-Strahlung gehärtet werden, ein Verfahren zu deren Herstellung sowie ihre Verwendung als Bestandteil von Pulverlacken.

## Beschreibung

Die Erfindung betrifft neue pulverförmige Bindemittel aus bestimmten (Meth)Acryloylgruppen aufweisenden Oligo- und Polyurethanen, die nach Applikation auf ein Substrat und Aufschmelzen durch Wärme mittels energiereicher Strahlung insbesondere UV-Strahlung gehärtet werden, ein Verfahren zu deren Herstellung sowie ihre Verwendung als Bestandteil von Pulverlacken.

Besonders hochwertige Beschichtungen aus pulverförmigen Bindemitteln werden bei Verwendung von Oligo- oder Polyurethanen erhalten. Solche Verbindungen werden z. B. in der EP-A 410242 beschrieben. Sie werden durch Umsetzung einer Polyisocyanatkomponente, bestehend aus mindestens einem organischen Polyisocyanat mit einer (Meth)Acryloylgruppen aufweisenden Alkoholkomponente, bestehend aus mindestens einem (Meth)Acryloylgruppen-aufweisenden einwertigem Alkohol und einer weiteren Aufbaukomponente, bestehend aus mindestens einer (Meth)Acryloylgruppen-freien Verbindung mit gegenüber Isocyanatgruppen reaktionsfähigen Gruppen hergestellt.

Die Herstellung dieser Verbindungen muß in einem organischen Lösungsmittel erfolgen. Eine lösungsmittelfreie Herstellung scheitert an den bekannt hohen Viskositäten der Urethanacrylate bei Temperaturen bis 120 °C. Eine Erhöhung der Herstellungstemperatur über 100 bis 120 °C birgt das dem Fachmann bekannte Risiko einer spontanen, ungewollten Polymerisation der (Meth)Acryloylgruppen aufweisenden Verbindungen. Der Nachteil der in der EP-A 410242 beschriebenen Bindemittel besteht also darin, daß ihre Herstellung in einem organischen Lösungsmittel erfolgen muß, welches am Ende der Herstellung unter hohem Aufwand wieder entfernt werden muß. Schon geringe Reste an dem Lösungsmittel beeinflussen das für die Applikation der Pulverlacke kritische Schmelzverhalten stark.

Zur Erniedrigung der Schmelzviskosität von Pulverlacken bestehend aus ungesättigten Polyestern oder acryloylfunktionellen Polyacrylaten werden diese Pulver nach EP-A 636 669 im Anschluß an die Herstellung mit einer niedermolekularen Vernetzersubstanz mit Vinylether-, Vinylester- oder (Meth)acrylat-Funktionalität abgemischt. Die acryloylfunktionellen Polyacrylate und die Vernetzersubstanz werden in der zitierten Anmeldung ebenfalls in organischen Lösungsmitteln hergestellt, welche im Anschluß entfernt werden müssen. Weiterhin bergen Abmischungen von Vinylethem oder -estern mit ungesättigten (Meth)acrylaten ein erheblich höheres Risiko einer ungewollten, spontanen Polymerisation (Copolymerisation elektronenreicher und -armer Doppelbindungen) als es beispielsweise bei reinen (Meth)acrylat-Systemen vorliegt.

A. Hult et al. beschreiben in Journal of Coatings Technology, Vol. 70, No. 884, Sept. 1998, 57 - 62 strahlungshärtbare Pulverlacke aus Mischungen von amorphen Methacrylat-funktionellem Polymer (Polyacrylat) und kristallinem (Meth)acrylat-Monomer. Auch hier ist es erforderlich, vorgenannte Polymere und Monomere getrennt und unter Verwendung von organischen Lösungsmitteln herzustellen, welche nach der Herstellung unter hohem Aufwand entfernt werden müssen.

Die der Erfindung zugrunde liegende Aufgabe bestand nun darin, (Meth)Acryloylgruppen aufweisende Oligo- und Polyurethane als Bindemittel für Pulverlacke bereitzustellen, die gegenüber den Bindemitteln nach dem Stand der Technik einen stark reduzierten Rest-Gehalt an organischen Lösungsmitteln aufweisen.

Es wurde nun gefunden, daß sich (Meth)Acryloylgruppen aufweisende Oligo- und Polyurethane als Bindemittel für Pulverlacke ohne Verwendung von Lösungsmitteln herstellen lassen. Dadurch ist der Rest-Gehalt an organischen Lösungsmitteln extrem gering.

Gegenstand der Erfindung sind neue, mittels energiereicher Strahlung härtbare Bindemittel für Pulverlacke enthaltend (Meth)Acryloylgruppen aufweisende Oligo- und Polyurethane dadurch gekennzeichnet, daß sie einen Massengehalt an organischen Lösungsmitteln unter 1% aufweisen.

Gegenstand der Erfindung ist auch ein Verfahren zur Herstellung von mittels energiereicher Strahlung härtbaren Bindemitteln für Pulverlacke aus (Meth)Acryloylgruppen aufweisenden Oligo- und Polyurethanen, dadurch gekennzeichnet, daß
A) ein Mono- oder Diisocyanat mit 4 bis 20 Kohlenstoffatomen und
B) eine Di- und/oder Polyisocyanat-Komponente, die mindestens ein Di- oder Polyisocyanat enthält,
   mit
C) einem Mono-Hydroxyalkyl(meth)acrylat mit 2 bis 12 Kohlenstoffen in der Alkylkette,
D) einer (Meth)acryloylgruppen aufweisenden Alkoholkomponente, bestehend aus mindestens einem (Meth)acryloylgruppen aufweisenden Alkohol und
E) einer (Meth)acryloylgruppen freien gegenüber Isocyanaten di- oder polyfunktionell reaktionsfähigen Verbindung,
wobei die Stoffmenge C) (mol OH-Gruppen) der Stoffmenge A) (mol NCO-Gruppen) entspricht und
wobei die Summe der Stoffmenge von D) (mol gegenüber Isocyanaten reaktionsfähigen Gruppen) und E) (mol gegenüber Isocyanaten reaktionsfähigen Gruppen) der Stoffmenge B) (mol NCO-Gruppen) entspricht und
wobei der Massenanteil von A) und C) zusammen - bezogen auf die Gesamtmasse an (Meth)Acryloylgruppen aufweisenden Oligo- und Polyurethanen - 10 bis 95% beträgt,
ohne Verwendung von organischem Lösemittel umgesetzt werden.

Gegenstand der Erfindung ist weiterhin die Verwendung der erfindungsgemäß hergestellten Bindemittel für Pulverlacke zur Beschichtung von Substraten aus Holz, Metall, Kunststoffen, mineralischen Stoffen oder bereits beschichteten Substraten oder von Substraten, die aus beliebigen Kombinationen der genannten Materialien bestehen.

Mono- oder Diisocyanate A) können aliphatisch oder aromatisch sein: Cyclohexylisocyanat, Butylendiisocyanat, Hexamethylendiisocyanat (HDI), Isophorondisocyanat (IPDI), 3(4)-Isocyanatomethyl-methylcyclohexyl-isocyanat (IMCI), Trimethylhexamethylendiisocyanat (2,2,4 und/oder 2,4,4-Trimethylhexamethylendiisocyanat), die isomeren Bis(4,4'-isocyanatocyclohexyl)methane, 1,4-Cyclohexylendiisocyanat, Phenylisocyanat, Toloylisocyanat, 1,4-Phenylendiisocyanat, 2,4- und/oder 2,6-Toluylendiisocyanat (TDI), 1,5-Naphthylendiisocyanat, 2,4'- und/oder 4,4'-Diphenylmethandiisocyanat (MDI) oder deren Derivate mit Urethan-, Isocyanurat-, Albphanat-, Biuret-, Uretdion-, Iminooxadiazindionstruktureinheiten, solange diese Derivate eine oder zwei freie NCO-Gruppen besitzen. Bevorzugt sind HDI, IPDI, TDI, MDI und die isomeren Bis(4,4'-isocyanatocyclohexyl)methane sowie deren Mischungen. Besonders bevorzugt sind IPDI und HDI oder deren Mischung.

Die Komponente B) besteht aus mindestens einem Di- und/oder Polyisocyanat. Geeignete Polyisocyanate sind beliebige, aus der Polyurethanchemie an sich bekannte, organische Polyisocyanate mit aliphatisch, cycloaliphatisch und/oder aromatisch gebundenen Isocyanatgruppen, die ein Molekulargewicht von 144 bis 1000, vorzugsweise 168 bis 300 aufweisen. Geeignet sind beispielsweise Butylendiisocyanat, Hexamethylendiisocyanat (HDI), Isophorondisocyanat (IPDI), 3(4)-Isocyanatomethyl-methylcyclohexyl-isocyanat (IMCI), Trimethylhexamethylendiisocyanat (2,2,4 und/oder 2,4,4-Trimethylhexamethylendiisocyanat), die isomeren Bis(4,4'-isocyanatocyclohexyl)methane, Isocyanatomethyl-1,8-octandiisocyanat, 1,4-Cyclohexylendiisocyanat, 1,4-Phenylendiisocyanat, 2,4- und/oder 2,6-Toluylendiisocyanat (TDI), 1,5-Naphthylendiisocyanat, 2,4'- und/oder 4,4'-Diphenylmethandiisocyanat (MDI), Triphenylmethan-4,4',4''-triisocyanat oder deren Derivate mit Urethan-, Isocyanurat-, Allophanat-, Biuret-, Uretdion-, Iminooxadiazindionstruktur und Mischungen derselben. Diese Derivate weisen im allgemeinen ein Molekulargewicht bis ca. 1.000 auf. Die Herstellung derartiger Derivate ist beispielsweise in US-A 3 124 605, US-A 3 183 112, US-PS 3 919 218, US-PS 4 324 879 oder EP-A 798 299 beschrieben.

Bevorzugt werden als Komponente B) HDI, IPDI, TDI, MDI und/oder durch Trimerisierung von HDI, TDI oder IPDI erhaltene Isocyanatgruppen aufweisende Polyisocyanate verwendet. Besonders bevorzugt sind HDI und IPDI und deren Mischung.

Das Mono-Hydroxyalkyl(meth)acrylat C) mit 2 bis 12 Kohlenstoffen in der Alkylkette sind insbesondere Hydroxyalkylester der Acrylsäure oder Methacrylsäure mit 2 bis 12, vorzugsweise 2 bis 4, Kohlenstoffatomen im Hydroxyalkylrest wie Hydroxyethyl(meth)acrylat, 2- und 3-Hydroxypropyl(meth)acrylat, 2-, 3- und 4-Hydroxybutyl(meth)acrylat zu verstehen. Bevorzugt wird 2-Hydroxyethylacrylat.

OH-Gruppen der C) werden zu NCO-Gruppen der Komponente A)in etwa äquivalenten Mengen zugesetzt, vorzugsweise im Äquivalentverhältnis OH : NCO = 1:1.

Eine (Meth)acryloylgruppen aufweisende Alkoholkomponente, bestehend aus mindestens einem (Meth)acryloylgruppen aufweisenden Alkohol D). Hierunter sind sowohl eine freie Hydroxylgruppe aufweisende Ester der Acrylsäure oder Methacrylsäure mit zweiwertigen Alkoholen zu verstehen wie beispielsweise 2-Hydroxyethyl-, 2- oder 3-Hydroxypropyl oder 2-, 3- oder 4-Hydroxybutyl-(meth)acrylat als auch beliebige Gemische aus derartigen Verbindungen. Außerdem kommen auch einwertige (Meth)Acryloylgruppen aufweisende Alkohole oder im wesentlichen aus derartigen Alkoholen bestehende Umsetzungsprodukte in Betracht, die durch Veresterung von n-wertigen Alkoholen mit (Meth)Acrylsäure erhalten werden. Als Alkohole können auch Gemische von unterschiedlichen Alkoholen eingesetzt werden, so daß n für eine ganze oder im statistischen Mittel gebrochene Zahl von größer 2 bis 4, vorzugsweise 3 steht, und wobei pro Mol der genannten Alkohole von (n-0,8) bis (n-1,2), vorzugsweise (n-1) Mol (Meth)Acrylsäure eingesetzt werden. Zu diesen Verbindungen bzw. Produktgemischen gehören beispielsweise die Umsetzungsprodukte von i) Glycerin, Trimethylolpropan und/oder Pentaerythrit, von niedermolekularen Alkoxylierungsprodukten derartiger Alkohole, wie beispielsweise ethoxyliertem oder propoxyliertem Trimethylolpropan, wie beispielsweise dem Anlagerungsprodukt von Ethylenoxid an Trimethylolpropan der OH-Zahl 550 oder von beliebigen Gemischen derartiger mindestens dreiwertiger Alkohole mit zweiwertigen Alkoholen wie beispielsweise Ethylenglykol oder Propylenglykol mit (ii) (Meth) Acrylsäure im genannten Molverhältnis. Diese Verbindungen weisen ein Molekulargewicht von 116 bis 1000, vorzugsweise von 116 bis 750 und besonders bevorzugt von 116 bis 158 auf. Bevorzugt wird 2-Hydroxyethylacrylat.

(Meth)acryloylgruppen freie gegenüber Isocyanaten di- oder polyfunktionell reaktionsfähige Verbindungen E) bestehen aus mindestens einer (Meth)Acryloylgruppenfreien organischen Verbindung mit mindestens zwei gegenüber Isocyanatgruppen reaktionsfähigen Gruppen, insbesondere mindestens zwei, vorzugsweise 2-4 und besonders bevorzugt 2-3 alkoholischen Hydroxylgruppen. Die als Komponente E) bzw. als Teil der Komponente E) besonders gut geeigneten Verbindungen weisen ein Molekulargewicht von 62-200 auf. Beispielhaft genannt seien Ethylenglykol, 1,2- und 1,3-Propandiol, Neopentylglykol, Butandiol, Hexandiol, Glycerin, Trimethylolethan, Trimethylolpropan, Pentaerythrit, Sorbit und Di(trimethylolpropan). Weiterhin als Komponente E) bzw. als Teil der Komponente E) geeignet, jedoch weniger bevorzugt, sind die aus der Polyurethanchemie an sich bekannten höher molekularen Verbindungen, mit gegenüber Isocyanatgruppen reaktions fähigen Gruppen, insbesondere Hydroxylgruppen, wie beispielsweise die bekannten Polyhydroxypolyether oder - polyester eines über 200 liegenden Molekulargewichts. Die Mitverwendung derartiger Aufbaukomponenten ist jedoch allenfalls in untergeordneten Mengen möglich, da sonst die für Pulverlack-Bindemittel wesentliche Bedingung bezüglich des Schmelzbereichs der Bindemittel nicht erfüllt werden kann.

In einer bevorzugten Ausführungsform werden als E) vollständig oder anteilig Polyesterdiole, hergestellt aus Diolen des Molekulargewichts 62 bis 400 und Lactonen, eingesetzt. Die Herstellung solcher Lacton-Polyester ist an sich bekannt. Die molaren Verhältnisse von Diol zu Lacton betragen von 1 zu 0,2 bis 1 zu 100, bevorzugt von 1 zu 0,5 bis 1 zu 5. Besonders bevorzugte Diole sind 1,2-Propandiol und 1,4- oder 1,4-Butandiol. Besonders bevorzugtes Lacton ist ε-Caprolacton.

Die Summe der Stoffmenge von D) (mol gegenüber Isocyanaten reaktionsfähigen Gruppen) und E) (mol gegenüber Isocyanaten reaktionsfähigen Gruppen) entspricht beim erfindungsgemäßen Verfahren der Stoffmenge B) (mol NCO-Gruppen).

Die Umsetzung von hydroxyfunktionellen Acrylaten mit Isocyanaten ist bekannt, z.B. aus P. K. T. Oldring (Ed.), Chemistry & Technology of UV & EB Formulations For Coatings, Inks & Paints, Vol. 2, 1991, SITA Technology, London, S. 73 - 97.

Zur Durchführung des erfindungsgemäßen Verfahrens wird beispielsweise so vorgegangen, daß entweder die isocyanathaltigen Bestandteile A) und B) vorgelegt und unter Durchleiten eines sauerstoffhaltigen Gases, vorzugsweise von Luft, bei einer Temperatur oberhalb des Schmelzpunkts des herzustellenden Produkts im Temperaturbereich 30 bis 140 °C mit C), D) und E) umgesetzt werden, bis der NCO-Gehalt auf unter 0,1 Gew.-% abgefallen ist. Dabei kann es zweckmäßig sein, C), D) und E) getrennt nacheinander, getrennt gleichzeitig oder als Mischung zuzudosieren. Bevorzugt wird E) oder ein Teil der Komponente E) zuletzt zugegeben.

Es ist auch möglich, C), D), E) vorzulegen und unter den genannten Bedingungen mit Isocyanat A), B) umzusetzen. Auch hierbei kann es zweckmäßig sein, A) und B) gleichzeitig oder nacheinander, gemischt oder getrennt zuzudosieren. Eventuell werden C), D) und E) nicht vollständig vorgelegt, sondern E) oder ein Teil davon wird abschließend nach weitgehend erfolgter Umsetzung zudosiert.

Die zum Oligo- und Polyurethan führende Additionsreaktion kann in an sich bekannter Weise mittels geeigneter Katalysatoren wie beispielsweise Zinnoctoat, Dibutylzinndilaurat oder tertiären Aminen wie Dimethylbenzylamin beschleunigt werden. Das als Umsetzungsprodukt anfallende Urethanacrylat kann durch Zugabe geeigneter Inhibitoren und Antioxidantien wie beispielsweise Phenole und/oder Hydrochinone in Mengen von jeweils 0,001 bis 0.3 Gew.-% bezogen auf Polyurethan, vor vorzeitiger und unerwünschter Polymerisation geschützt werden. Der Zusatz dieser Hilfsmittel kann vor, gleichzeitig und/oder im Anschluß an die zum Polyurethan führende Umsetzung erfolgen.

Es ist weiterhin auch möglich, die genannten Verbindungen in einem Rohrreaktor, statischem Mischer oder Reaktionsknetem umzusetzen. Dabei werden im Vergleich zu diskontinuierlichen Umsetzungen im Kesselreaktor sehr kurze Reaktionszeiten (< 30 min) bei höheren Temperaturen (80 bis 200 °C) verwendet. Bei dieser Verfahrensvariante strömen die Reaktanden kontinuierlich z.B. durch einen Rohrreaktor und werden dabei umgesetzt.

Die durch das erfindungsgemäße Verfahren erhaltenen Polyurethane bzw. Urethanacrylate stellen wertvolle Bindemittel für Pulverlacke dar. Sie zeichnen sich insbesondere durch einen äußerst geringen Anteil an organischen Lösungsmitteln aus. Erfindungsgemäße Produkte besitzen einen Massengehalt an organischen Lösungsmitteln von unter 1%, bevorzugt von unter 0,5%, besonders bevorzugt von unter 0,1% und ganz besonders bevorzugt von unter 0,05%. Sie können ohne weitere Zusätze als hitze-vernetzbare Pulver-Klarlacke verarbeitet werden (in welchem Falle das Bindemittel mit dem Überzugsmittel identisch wäre) oder, vorzugsweise, mit den aus der Lacktechnologie üblichen Hufs- und Zusatzmitteln, wie beispielsweise Pigmenten, wie z.B. Titandioxid, Verlaufsmitteln, wie z.B. Polybutylacrylat oder Siliconen, Entlüftungsmitteln wie z.B. Benzoin und/oder anderen Zusatzstoffen versehen und z.B. auf Extrudern oder Knetern bei Temperaturen von ca. 40 bis 140, vorzugsweise 60-80°C, homogenisiert werden. Es ist allerdings auch möglich obengenannte Hilfs- und Zusatzmittel sofort nach Ende der Herstellung in die Schmelze einzurühren.

Der erhaltene Feststoff wird dann in an sich bekannter Weise gemahlen und durch Sieben von groben Kornanteilen, vorzugsweise zumindest von solchen mit einer oberhalb 0,1mm liegenden Korngröße befreit.

Die so hergestellten pulverförmigen Überzugsmittel können nach üblichen Pulverauftragsverfahren, wie z.B. elektrostatischem Pulversprühen, triboelektrischem Auftrag oder Wirbelsintern, auf die zu überziehenden Formteile aufgebracht werden. Die Überzüge werden dann zunächst durch Einwirkung von Hitze (z.B. durch IR-Strahler) geschmolzen, es bildet sich ein klarer Film, sofern keine Pigmente oder Mattierungsmittel o.ä. eingearbeitet wurden. Die für das Schmelzen und Verlaufen des Pulvers notwendige Temperatur liegt oberhalb des Schmelzbereichs des Überzugsmittels. Die Härtung der Überzüge kann entweder durch Erhitzen auf Temperatur von 130-220°C, vorzugsweise 150-190°C, und/oder durch die Einwirkung von energiereicher Strahlung wie UV- oder Elektronenstrahlung erfolgen.

Im Falle der Vernetzung mittels UV-Bestrahlung ist es notwendig, in die Überzugsmassen Fotoinitiatoren homogen einzuarbeiten.

Als Fotoinitiatoren sind die üblicherweise eingesetzten Verbindungen geeignet, wenn sie die Pulvereigenschaften wie Rieselfähigkeit und Lagerfähigkeit nicht negativ beeinflussen.

Beispiele hierfür sind 1-Hydroxycyclohexylphenylketon, Benzildimethylketal oder - bei pigmentierten Systemen - 2-Methyl-1-(4-(methylthio)phenyl-2-morpholino-propanon-1 oder Trimethyl-benzoyl-diphenyl-phosphinoxid.

Die genannten Fotoinitiatoren, die in Mengen zwischen 0,1 und 10 Gew.-%, vorzugsweise 0,1 bis 5 Gew.-%, bezogen auf das Gewicht der Polyurethane, eingesetzt werden, können als einzelne Substanz oder, wegen häufiger vorteilhafter synergistischer Effekte, auch in Kombination miteinander verwendet werden.

### Beispiele

In den nachfolgenden Beispielen beziehen sich alle Prozentangaben auf das Gewicht.

### Beispiel 1

In einem beheizbaren 4 l-Reaktionsgefäß mit Rührer, Tropftrichter, Gaseinleitung und Innenthermometer werden 525,0 g Hexamethylendiisocyanat, 0,6 g Dibutylzinndilaurat, 0,5 g 2,5-Di-tert.-butylhydrochinon, 2,5 g 2,6-Di-tert.-butyl-4-methylphenol vorgelegt und unter Rühren und Durchleiten von Luft (3 l/h) auf 80°C erhitzt. Es werden 725,0 g 2-Hydroxyethylactylat zudosiert, so daß die Innentemperatur nicht über 90°C steigt. Anschließend wird bei 90°C solange nachgerührt, bis der NCO-Gehalt unter 0,2% liegt.

Danach werden 781,3g Isophorondiisocyanat, weitere 0,6 g Dibutylzinndilaurat, 0,5 g 2,5-Di-tert.-butylhydrochinon, 2,5 g 2,6-Di-tert.-butyl-4-methylphenol zugegeben. Bei 80 bis 90°C werden zunächst 245,0 g 2-Hydroxyethylacrylat und dann 220,0 g Trimethylolpropan zudosiert. Es wird solange weitergerührt, bis der NCO-Gehalt der Reaktionsmischung unter 0,2% liegt. Dann wird die heiße Schmelze in eine Aluminiumschale gegossen, wo sie langsam erstarrt und kristallisiert. Das abgekühlte, kristallisierte Produkt wird mechanisch zerkleinert.

### Beispiel 2

In einem beheizbaren 2 l-Reaktionsgefäß mit Rührer, Tropftrichter, Gaseinleitung und Innenthermometer werden 588,3 g Isophorondiisocyanat, 0,6 g Dibutylzinndilaurat, 0,5 g 2,5-Di-tert.-butylhydrochinon, 1,1 g 2,6-Di-tert.-butyl-4-methylphenol, 1,1 g-Methoxyphenol vorgelegt und unter Rühren und Durchleiten von Luft (3 l/h) of 80°C erhitzt. Bei 80 bis 90°C werden zunächst 382,8 g 2-Hydroxyethylacrylat und dann eine Mischung von 44,7 g Trimethylolpropan und 98,2 g 3(4),8(9)-Bishydroxymethyl-tricyclo-5.2.1.0^{2.6}-decan zudosiert. Es wird solange weitergerührt, bis der NCO-Gehalt der Reaktionsmischung unter 0,2% liegt.Dann wird die heiße Schmelze in eine Aluminiumschale gegossen, wo sie langsam erstarrt und kristallisiert. Das abgekühlte, kristallisierte Produkt wird mechanisch zerkleinert.

### Beispiel 3

In einem beheizbaren 4 l-Reaktionsgefäß mit Rührer, Tropftrichter, Gaseinleitung und Innenthermometer werden 1180,0 g Isophorondiisocyanat, 1,1 g Dibutylzinndilaurat, 0,9 g 2,5-Di-tert.-butylhydrochinon, 2,2 g 2,6-Di-tert.-butyl-4-methylphenol, 2,2 g p-Methoxyphenol vorgelegt und unter Rühren und Durchleiten von Luft (3 l/h) auf 80°C erhitzt. Bei 80 bis 90°C werden zunächst 858,0 g 2-Hydroxyethylmethacrylat und dann 176,0 g Trimethylolpropan zudosiert. Es wird solange weitergerührt, bis der NCO-Gehalt der Reaktionmischung unter 0,2% liegt. Dann wird die heiße Schmelze in eine Aluminiumschale gegossen, wo sie langsam erstarrt und kristallisiert. Das abgekühlte, kristallisierte Produkt wird mechanisch zerkleinert.

### Beispiel 4

In einem beheizbaren 2 l-Reaktionsgefäß mit Rührer, Tropftrichter, Gaseinleitung und Innenthermometer werden 333,0 g Isophorondiisocyanat, 200,1 g Toluenediisocyanat (Desmodur® T65, Fa. Bayer AG, Leverkusen), 0,5 g Dibutylzinndilaurat, 0,4 g 2,5-Di-tert.-butylhydrochinon, 1,0 g 2,6-Di-tert.-butyl-4-methylphenol, 1,0 g p-Methoxyphenol vorgelegt und unter Rühren und Durchleiten von Luft (3 l/h) auf 80°C erhitzt. Bei 80 bis 90°C werden zunächst 382,8 g 2-Hydroxyethylacrylat und dann 89,3 g Trimethylolpropan zudosiert. Es wird solange weitergerührt, bis der NCO-Gehalt der Reaktionsmischung unter 0,2% liegt.Dann wird die heiße Schmelze in eine Aluminiumschale gegossen, wo sie langsam erstarrt und kristallisiert. Das abgekühlte, kristallisierte Produkt wird mechanisch zerkleinert.

### Beispiel 5

In einem beheizbaren 4 l-Reaktionsgefäß mit Rührer, Tropftrichter, Gaseinleitung und Innenthennometer werden 588,3 g Isophorondiisocyanat, 0,6 g Dibutylzinndilaurat, 0,5 g 2,5-Di-tert.-butylhydrochinon, 1,1 g 2,6-Di-tert.-butyl-4-methylphenol, 1,1 g p-Methoxyphenol vorgelegt und unter Rühren und Durchleiten von Luft (3 l/h) auf 80°C erhitzt. Bei 80 bis 90°C werden zunächst 429,0 g 2-Hydroxyethylmethacrylat und dann eine Mischung von 30,7 g Glycerin und 72,0 1,4-Cyclohexandimethanol zudosiert. Es wird solange weitergerührt, bis der NCO-Gehalt der Reaktionsmischung unter 0,2% liegt. Dann wird die heiße Schmelze in eine Aluminiumschale gegossen, wo sie langsam erstarrt und kristalisiert. Das abgekühlte, kristalline Produkt wird mechanisch zerkleinert.

### Beispiel 6

In einem beheizbaren 4 l-Reaktionsgefäß mit Rührer, Tropftrichter, Gaseinleitung und Innenthermometer wrden 445,2 g Hexamethylendiisocyanat, 0,6 g Dibutylzinndilaurat, 0,5 g 2,6-Di-tert.-butyl-4-methylphenol, 1,1 g p-Methoxyphenol vorgelegt und unter Rühren und Durchleiten von Luft auf 80°C erhitzt. Bei 80 bis 90°C wird eine Mischung von 371,2 g 2-Hydroxyethylacrylat und 261,0 g eines Lactonpolyesters, hergestellt aus 1,0 mol 1,4-Butanol und 1,5 mol ε-Caprolacton, zudosiert. Es wird solange weitergerührt, bis der NCO-Gehalt der Reaktionsmischung unter 0,1 % liegt. Dann wird die heiße Schmelze in einer Aluminiumschale gegossen, wo sie erstarrt und kristallisiert. Das abgekühlte, kristallisierte Produkt wird mechanisch zerkleinert.

### Beispiel 7

Die hergestellten Bindemitttel 1) - 6) werden auf ihren Gehalt an organischen Lösemitteln untersucht. Dazu werden Proben in o-Dichlorbenzol gelöst und mittels eines Headspace-Gaschromatographen mit Flammenionisationsdetektor untersucht. Der Gehalt der folgenden Lösungsmittel wird durch Retentionszeitvergleich überprüft: Butylacetat, 1-Methoxy-2-propylacetat, o-Xylol, p-Xylol, m-Xylol, Ethylbenzol, Cumol, Tetrahydrofuran, Acetonitril, Aceton, n-Butanol und t-Butanol. In allen Proben sind die Konzentrationen der genannten Lösungsmittel unter 0,001%. Die Summe der Konzentrationen all unbekannten Komponenten im Bereich der sogenannten "Niedrigsieder" (Siede-Temperatur bis 250°C entsprechend der Temperatur im Injektorbereich des Gaschromatographen) beträgt in allen Proben unter 0,01%.

### Beispiel 8

Zur Überprüfung der Lackeigenschaften werden zunächst in einem vereinfachten Verfahren Lackfilme aus den Bindemitteln 1) - 6) hergestellt, die auf Kratzfestigkeit und Lösemittelbeständigkeit geprüft werden. Dazu werden je 5,0 g Bindemittel mit je 0,2 g Photoinitiator Irgacure® 907 (Fa. Ciba Spezialitätenchemie, Lampertheim) fein vermörsert und mittels eines Siebs der Maschenweite 0,5 mm auf Eisenbleche, die mit einer kathodischen Tauchlakkierung vorbehandelt wurden (Fa.Bonder), in einer Schichtstärke von ca. 0,1 mm aufgetragen. Die Bleche werden 20 min im Ofen bei 90°C temperiert. In allen Fällen bildet sich ein homogener, flüssiger Film. Unmittelbar im Anschluß werden die Bleche heiß an einem UV-Strahler (Quecksilberhochdruckstrahler, 80 W/cm, Abstand 20 cm, Bandgeschwindigkeit 1 m/min) vorbeibewegt. Die Filme sind sofort hart und werden nach Abkühlen auf Raumtemperatur und 60 min Lagerung beurteilt.

Die Lösemittelfestigkeit wird mittels eines in Butylacetat getränkten Wattebauschs, der mit einem Andruck von ca. 1 kg in 100 Doppelhüben über die Filme bewegt wird, beurteilt. Die Kratzfestigkeit wird durch Ritzen mit dem Fingernagel überprüft. Die Filme sind alle lösemittelfest. Die Filme von Beispiel 1), 2), 4) und 6)zeigen eine sehr gute Kratzfestigkeit, die Filme von Beispiel 3) und 5) eine gute Kratzfestigkeit.

### Beipiel 9

Zur Überprüfung der Pulvereigenschaften werden 96 Gew.% das Bindemittels 1) mit 3 Gew.% Photoinitiator Irgacure® 2959 (Fa. Ciba Spezialitätenchemie, Lampertheim) und 1 Gew.% Verlaufshilfsmittel Byk LPG 6952 (Fa. Byk Chemie, Wesel) zunächst in einem Premixer Pilot (Fa. Prism) für 30 Sekunden bei 2500 U/min vorgemischt. Anschließend wird die Mischung in einem Extruder Typ MT 19 PC (Fa. APV) bei 45°C Temperatur in Zone 1 und 2 sowie 300 U/min bei ca. 60% Auslastung weiterverarbeitet. Die extrudierte Mischung wird nach Kristallisation mechanisch grob zerkleinert und anschließend in einer Sichtermühle Typ ICM4 (Fa. Neumann und Esser) mit den Einstellungen Sichter 30 m/s und Rotor 100 m/s gemahlen. Nach Sieben zum Ausschluß von Mahlgut mit einem Durchmesser größer 90 µm wird das resultierende Pulver mit einer Elektrostatic-Pistole (Fa. Wagner) bei 80 kV auf ein Eisenblech, das mit einer kathodischen Tauchlackierung vorbehandelt wurde (Fa. Bonder), versprüht. Das Blech wird 5 min im Ofen bei 100°C temperiert. Es bildet sich ein homogener, flüssiger Film. Unmittelbar im Anschluß wird das Blech heiß an einem UV-Strahler (Quecksilberhochdruckstrahler, 80 W/cm, Abstand 20 cm, Bandgeschwindigkeit 5 m/min) vorbeibewegt. Der Film ist sofort hart und wird nach Abkühlen auf Raumtemperatur und 60 min Lagerung beurteilt. Schichtdicke 80 bis 100 µm.

Die Lüsemittelfestigkeit wird mittels eines in Butylacetat getränkten Wattebauschs, der mit einem Andruck von ca. 1 kg in 100 Doppelhüben über den Film bewegt wird, beurteilt. Die Kratzfestigkeit wird durch Ritzen mit dem Fingernagel überprüft. Der Film ist lösemittel- und kratzfest.

## Patentansprüche

1. Mittels energiereicher Strahlung härtbare Bindemittel für Pulverlacke enthaltend (Meth)Acryloylgruppen aufweisende Oligo- und Polyurethane dadurch gekennzeichnet, daß sie einen Massengehalt an organischen Lösungsmitteln unter 1% aufweisen.

2. Verfahren zur Herstellung von mittels energiereicher Strahlung härtbaren Bindemitteln für Pulverlacke aus (Meth)Acryloylgruppen aufweisenden Oligo- und Polyurethanen, dadurch gekennzeichnet, daß:
A) ein Mono- oder Diisocyanat mit 4 bis 20 Kohlenstoffatomen und
B) eine Di- und/oder Polyisocyanat-Komponente, die mindestens ein Di- oder Polyisocyanat enthält,
mit
C) einem Mono-Hydroxyalkyl(meth)acrylat mit 2 bis 12 Kohlenstoffen in der Alkylkette,
D) einer (Meth)acryloylgruppen aufweisenden Alkoholkomponente, bestehend aus mindestens einem (Meth)acryloylgruppen aufweisenden Alkohol und
E) einer (Meth)acryloylgruppen freien gegenüber Isocyanaten di- oder polyfunktionell reaktionsfähigen Verbindung,
wobei die Stoffmenge C) (mol OH-Gruppen) der Stoffmenge A) (mol NCO-Gruppen) entspricht und
wobei die Summe der Stoffmenge von D) (mol gegenüber Isocyanaten reaktionsfähigen Gruppen) und E) (mol gegenüber Isocyanaten reaktionsfähigen Gruppen) der Stoffmenge B) (mol NCO-Gruppen) entspricht
und wobei der Massenanteil von A) und C) zusammen - bezogen auf die Gesamtmasse an (Meth)Acryloylgruppen aufweisenden Oligo- und Polyurethanen - 10 bis 95% beträgt,
ohne Verwendung von organischem Lösemittel umgesetzt werden.

3. Verfahren nach Anspruch 2, dadurch gekennzeichnet, dass die (Meth)acrylolgruppen freie, gegenüber Isocyanaten di- oder polyfunktionell reaktionsfähige Verbindung zu 10 bis 100 Gew.-% aus einem Lacton-Polyester besteht.

4. Verwendung der Bindemittel für Pulverlacke nach Anspruch 1 zur Beschichtung von Substraten aus Holz, Metall, Kunststoffen, mineralischen Stoffen oder bereits beschichteten Substraten oder von Substraten, die aus beliebigen Kombinationen der genannten Materialien bestehen.
